# EUROPÄISCHE PATENTSCHRIFT

(11) **EP 1 145 761 B1**
(45) Veröffentlichungstag und Bekanntmachung des Hinweises auf die Patenterteilung: **10.12.2003**
(21) Anmeldenummer: 01810230.1
(22) Anmeldetag: 07.03.2001
(51) Int. Cl.: B01J 19/32, F25J 3/02

(54) **Geordnete Kolonnenpackung mit einer Feinstrukturierung**
Ordered column packing having fine structure
Garnissage de colonne ordonée ayant une structure fine

(30) Priorität: 04.04.2000 EP 00810287
(43) Veröffentlichungstag der Anmeldung: 17.10.2001
(73) Patentinhaber: Sulzer Chemtech AG, 8404 Winterthur (CH)
(72) Erfinder: Kessler, Alwin, 9546 Tuttwil (CH)
(74) Vertreter: Sulzer Management AG

(56) Entgegenhaltungen:
- EP-A- 0 170 402
- EP-A- 0 293 003
- EP-A- 0 428 265
- WO-A-98/55221
- US-A- 5 171 544

## Beschreibung

Die Erfindung betrifft eine geordnete Kolonnenpackung mit einer Feinstrukturierung gemäss Oberbegriff von Anspruch 1.

Die geordnete Packung ist für eine Kolonne vorgesehen, in der ein Stoff- und Wärmeaustausch zwischen einer als Rieselfilm über die Packung fliessenden Flüssigkeit und einer in Gegenrichtung strömenden Dampf- oder Gasphase durchgeführt wird. Die durch den Packungskörper zur Verfügung stehende Oberfläche muss für einen maximal ausgebildeten Austauschprozess an allen Stellen gleichmässig von der flüssigen Phase bedeckt sein. Besteht das Material, aus dem die Packung hergestellt ist, aus einem Metallgewebe, so bewirken Kapillarkräfte bei geeigneten Abmessungen der verwobenen Metalldrähte eine ausgezeichnete Benetzung der Oberfläche. Eine weniger gute aber dennoch brauchbare Benetzung ergibt sich bei einem wesentlich kostengünstigeren Packungskörper, der aus der CH-A- 664 091 bekannt ist. Dieser Packungskörper besteht aus Metallfolien, die eine Feinstrukturierung - gebildet durch ein Netz von sich kreuzenden Rinnen - aufweisen. Dabei werden die Rinnen durch Flanken von konvexen und konkaven Strukturelementen - beispielsweise von pyramidenförmigen Erhebungen und Vertiefungen - gebildet. Dank den Rinnen wird die Flüssigkeit auf der Packung auch in horizontaler Richtung verteilt. Es sind auch Packungen aus Streckmetall bekannt, die einen kostengünstigen Ersatz für Metallgewebe bilden sollen, mit denen aber wegen ungenügender Benetzbarkeit keine Trennleistung wie mit Packungen aus Metallgeweben erreichbar ist.

EP-A-0 293 003 offenbart auch eine geordnete Kolonnenpackung mit einer Feinstrukturierung.

Aufgabe der Erfindung ist es, eine geordnete Packung zu schaffen, die aus einem Material herstellbar ist, das kostengünstiger als Metallgewebe und besser benetzbar als die bekannten Metallfolien oder Streckmetalle ist. Diese Aufgabe wird durch die im Anspruch 1 definierte Kolonnenpackung gelöst.

Die geordnete Kolonnenpackung umfasst - in Gestalt von Strömungskanäle enthaltenden Packungslagen - folienartiges Material mit einer Feinstrukturierung. Das folienartige Material ist mit konkaven und konvexen Strukturelementen in einer alternierenden Anordnung profiliert. Ein mittlerer Abstand a besteht zwischen Zentren benachbarter konkaver bzw. konvexer Strukturelemente. Dieser mittlere Abstand a ist wesentlich kleiner als ein Abstand zwischen Mittellinien benachbarter Strömungskanäle. Das folienartige Material weist eine zweite Feinstrukturierung auf, die aus regelmässig angeordneten Durchbrüchen besteht. Ein mittlerer Abstand b zwischen Zentren benachbarter Durchbrüche ist kleiner als der mittlere Abstand a, vorzugsweise um mindestens 50 % kleiner, und Ränder der Durchbrüche weisen jeweils eine konvexe und konkave Stellen umfassende Formgebung auf.

Die abhängigen Ansprüche 2 bis 7 betreffen vorteilhafte Ausführungsformen der erfindungsgemässen Packungen und zwar in Bezug auf besondere Feinstrukturierungen. Die abhängigen Ansprüche 8 und 9 betreffen besonders ausgebildete Packungen.

Nachfolgend wird die Erfindung anhand der Zeichnungen erläutert. Es zeigen:
- Fig. 1: ausschnittsweise zwei Lagen einer geordneten Packung mit einer Feinstrukturierung,
- Fig. 2: eine profilierte Folie,
- Fig. 3: ein Streckgitter,
- Fig. 4: eine streckgitterartige Folie,
- Fig. 5: einen Querschnitt durch eine erfindungsgemäss strukturierte Folie mit einer ersten und einer zweiten Feinstrukturierung,
- Fig. 6: eine Folie mit einer zweiten Feinstrukturierung und
- Fig. 7: eine Draufsicht auf eine weitere Folie mit einer zweiten Feinstrukturierung.

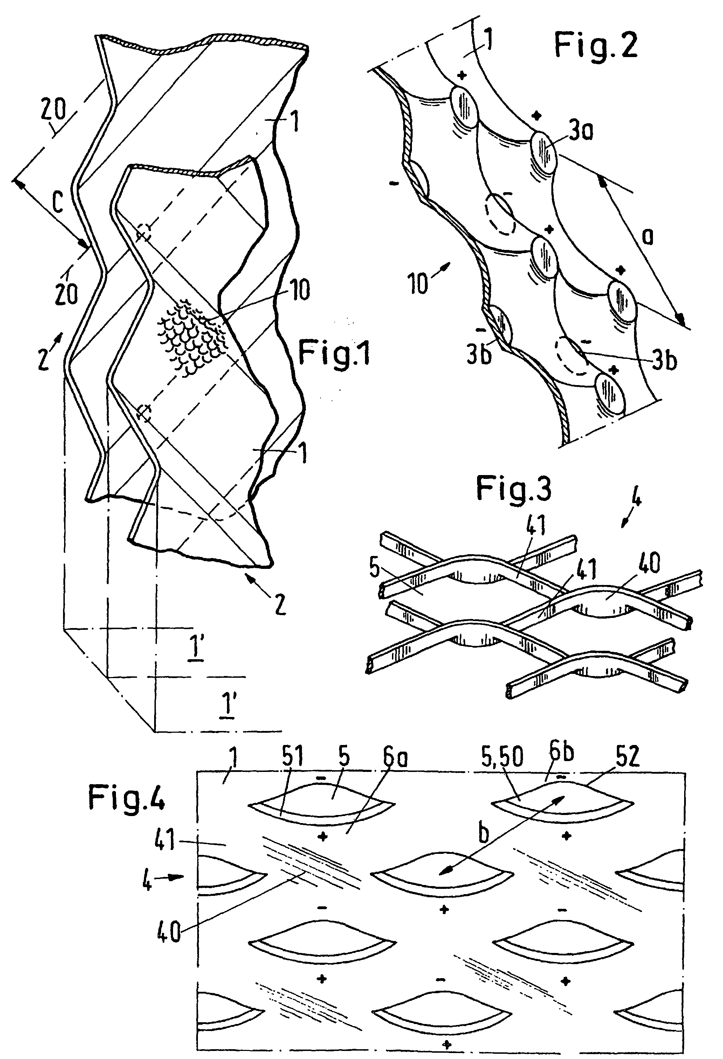

Die Fig. 1 zeigt ausschnittsweise zwei Lagen 1' einer geordneten Kolonnenpackung, die eine Feinstrukturierung 10 aufweist. Jede Lage 1' besteht aus einem folienartigen Material 1 und enthält Strömungskanäle 2. Ein Beispiel zu einer Feinstrukturierung 10 des folienartigen Materials 1 ist vergrössert in Fig. 2 dargestellt. Die Folie 1 ist mit konvexen Strukturelementen 3a (mit Pluszeichen + markiert) und konkaven Strukturelementen 3b (Minuszeichen -) in einer alternierenden Anordnung profiliert. Zwischen Zentren benachbarter konvexen bzw. konkaven Strukturelemente 3a, 3b besteht ein mittlerer Abstand a. Dieser mittlere Abstand a ist wesentlich kleiner als ein Abstand c zwischen Mittellinien 20 benachbarter Strömungskanäle 2.

Erfindungsgemäss weist das folienartige Material eine zweite Feinstrukturierung auf, die aus regelmässig angeordneten Durchbrüchen 5 besteht: siehe die Ausführungsformen der folgenden Figuren 3 bis 7, bei denen die Durchbrüche 5 durch repetitiv angeordnete Schlitze 50 gebildet sind. Ein mittlerer Abstand b - siehe Fig. 4 - zwischen Zentren benachbarter Durchbrüche 5 ist kleiner als der mittlere Abstand a; vorzugsweise ist er um mindestens 50 % kleiner. Die Ränder 51, 52 der Durchbrüche 5 weisen eine Formgebung auf, die jeweils konvexe und konkave Stellen 6a bzw. 6b umfasst (durch + und - symbolisiert). Auf der Rückseite der Folie 1 erscheinen die konvexen Stellen 3a und 6a als konkave und umgekehrt die konkaven Stellen 3b und 6b als konvexe. Die Durchgangsöffnungen 5, die sich zwischen den Rändern 51 und 52 der Schlitze 50 auftun, sind jeweils aufgrund einer plastischen Umformung gegeben.

Mit Vorteil sind sowohl die Strukturelemente 3b, 3a der ersten Feinstrukturierung auf den Punkten eines ersten periodischen Punktegitters als auch die Durchbrüche 5 der zweiten Feinstrukturierung auf den Punkten eines zweiten periodischen Punktegitters angeordnet. Die erste Feinstrukturierung kann auch aus einer Rillierung bestehen, bei der eine Abfolge von konvexen und konkaven Strukturelementen, nämlich Kämme und Täler, nur in einer Richtung vorliegen.

Ein Beispiel für eine zweite Feinstrukturierung, deren Durchbrüche 5 auf den Punkten eines periodischen Punktegitters angeordnet sind, ist ein Streckgitter 4 mit Nodalbereichen 40 und internodalen Stegen 41, wie es in Fig. 3 gezeigt ist. Dieses Streckgitter 4 muss sehr fein ausgebildet sein, damit eine in der Kolonne zu behandelnde Flüssigkeit die Durchbrüche 5 füllt. Ein solches Streckgitter 4 herzustellen, ist schwierig. Einfacher herzustellen ist die streckgitterartige Folie 4 der Fig. 4. Hier sind die internodalen Stege 41 verglichen mit den Ausmassen der Durchbrüche 5 relativ breit.

Die Elementarzellen des ersten Bezugsgitters sind beispielsweise quadratisch (Fig. 2). In streckgitterartigen Folien 4 haben die Durchbrüche 5 jeweils einen grössten Durchmesser, die zueinander parallel sind; diese Durchmesser sind mit Vorteil in Richtung der Diagonalen der genannten Elementarzellen orientiert.

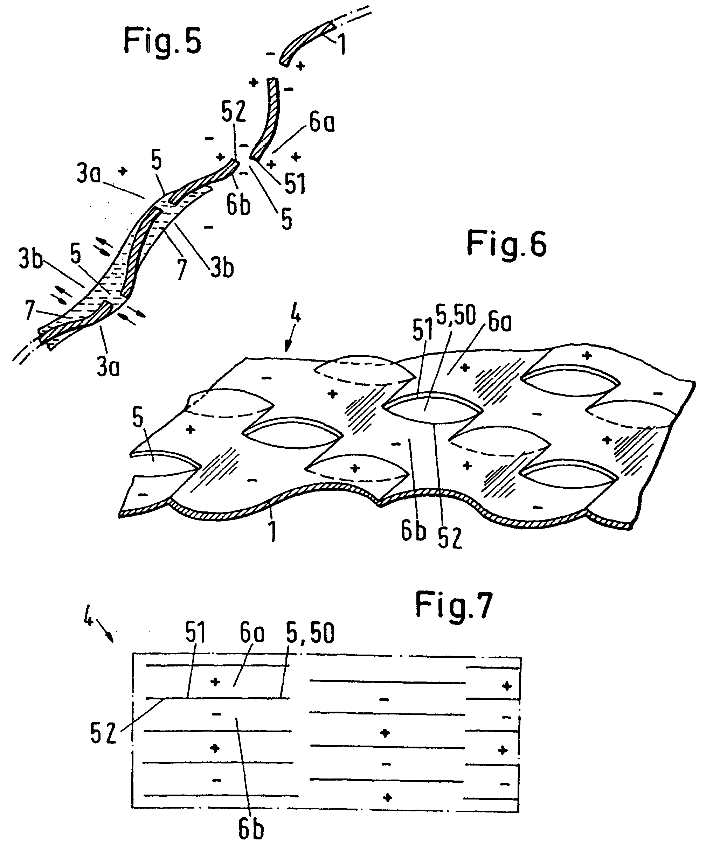

Ein guter Stoff- oder Wärmeaustausch zwischen Flüssigkeit und Dampf ergibt sich durch ein Zusammenspiel der Kapillarkräfte aufgrund der beiden Feinstrukturierungen. Die Wirkunsgsweise dieses Zusammenspiels ist in Fig. 5 illustriert: Jedes konkave Strukturelement 3b ist mit Flüssigkeit 7 gefüllt, wobei aufgrund der Oberflächenspannung die Tendenz zu einer Ansammlung im zentralen Bereich besteht. Auf der konvexen Rückseite 3a hat die Flüssigkeit 7 die Tendenz, sich zurückzuziehen und die Packungsoberfläche trocken zu legen. Dies gilt, wenn nur die erste Feinstrukturierung vorliegt. Bei einer erfindungsgemäss gegebenen zweiten Feinstrukturierung weisen die konvexen Strukturelemente 3a oder ein Teil dieser Strukturelemente 3a Durchbrüche 5 auf. Die Ränder 51, 52 der Durchbrüche 5 umfassen gemäss der Erfindung konkave Stellen 6b. An diesen Stellen 6b bildet die auf der konkaven Rückseite 3b sich befindende Flüssigkeit 7 eine freie Flüssigkeitsoberfläche aus, die merklich zum Austauschprozess - durch Doppelpfeile symbolisiert - beiträgt. Ist die Rasterung der Durchbrüche 5 (zweites Punktegitter) gegenüber einer Periodizität der ersten Feinstrukturierung ausreichend fein, so trägt praktisch jedes konvexe Strukturelement 3a in seinem zentralen Bereich einen Durchbruch 5, der zu einer Erweiterung der freien Flüssigkeitsoberfläche beiträgt.

Die Fig. 6 zeigt eine Folie 1, die zu einer strukturierten Folie 4 mit einer zweiten Feinstrukturierung umgeformt ist und bei der zwischen benachbarten, parallelen Schlitzen 50 zylindrische Teilflächen konvexe und konkave Stellen 6a bzw. 6b bilden. Durch eine alternierende Anordnung dieser Stellen 6a, 6b bilden die Ränder 51 und 52 der Schlitze 50 die Durchbrüche 5.

Eine weitere Folie 4 mit einer ähnlichen zweiten Feinstrukturierung ist in Fig. 7 als eine Draufsicht dargestellt. Die Plus- und Minuszeichen geben wieder die konvexen und konkaven Stellen 6a bzw. 6b an.

Das folienartige Material 1 besteht mit Vorteil aus einer metallischen Legierung. Die Foliendicke liegt im Bereich zwischen 0.1 und 0.4 mm, vorzugsweise zwischen 0.15 und 0.3 mm. Der mittlere Abstand b zwischen benachbarten Durchbrüchen 5 beträgt 0.3 bis 2 mm. Der relative, auf die gesamte Fläche des folienartigen Materials 1 bezogene Anteil der offenen Querschnittsflächen, die durch die Durchbrüche 5 gegeben sind, liegt im Bereich zwischen 10 und 50%.

Die erfindungsgemässe Packung ist in der Regel aus einer Mehrzahl von über einander angeordneten Packungselementen aufgebaut. Bei einer bevorzugt verwendeten Kolonnenpackung ist jedes Packungselement aus einer Vielzahl von Packungslagen zusammengesetzt, wobei sich die Strömungskanäle benachbarter Packungslagen offen kreuzen: siehe Fig. 1.

Es ist auch möglich, eine Kolonnenpackung heterogen aufzubauen, nämlich aus Packungslagen 1', die aus dem folienartigen Material 1 bestehen, und andersartigen Packungslagen (nicht dargestellt), die insbesondere eine Struktur mit porösen Doppelwänden aufweisen, in denen katalytisch wirksame Stoffe eingebracht sind. Bei dieser Packung können die aus dem folienartigen Material gebildeten Packungslagen auch als Träger von katalytisch wirksamen Stoffen ausgebildet sein.

## Patentansprüche

1. Geordnete Kolonnenpackung mit einer Feinstrukturierung (10), folienartiges Material (1) in Gestalt von Strömungskanäle (2) enthaltenden Packungslagen umfassend, wobei das folienartige Material mit konkaven Strukturelementen (3b; Minuszeichen -) und konvexen Strukturelementen (3a; Pluszeichen +) in einer alternierenden Anordnung profiliert ist, ein mittlerer Abstand a zwischen Zentren benachbarter konkaver bzw. konvexer Strukturelemente besteht und dieser mittlere Abstand a wesentlich kleiner als ein Abstand zwischen Mittellinien (20) benachbarter Strömungskanäle ist, **dadurch gekennzeichnet, dass** das folienartige Material eine zweite Feinstrukturierung aufweist, die aus regelmässig angeordneten Durchbrüchen (5) besteht, wobei ein mittlerer Abstand b zwischen Zentren benachbarter Durchbrüche kleiner als der mittlere Abstand a ist, vorzugsweise um mindestens 50 % kleiner ist, und Ränder (51, 52) der Durchbrüche jeweils eine konvexe und konkave Stellen (6a, 6b) umfassende Formgebung aufweisen.

2. Packung nach Anspruch 1, **dadurch gekennzeichnet, dass** die Durchbrüche (5) durch repetitiv angeordnete Schlitze (50) gebildet sind, wobei aufgrund einer plastischen Umformung jeweils eine Durchgangsöffnung zwischen den Rändern (51, 52) der Schlitze gegeben ist.

3. Packung nach Anspruch 1 oder 2, **dadurch gekennzeichnet, dass** die konvexen und konkaven Strukturelemente (3a, 3b) der ersten Feinstrukturierung auf den Punkten eines ersten periodischen Punktegitters angeordnet sind und dass mit Vorteil auch die Durchbrüche (5) der zweiten Feinstrukturierung auf den Punkten eines zweiten periodischen Punktegitters angeordnet sind.

4. Packung nach Anspruch 3, **dadurch gekennzeichnet, dass** Elementarzellen des ersten Bezugsgitters quadratisch sind, die Durchbrüche (5) jeweils einen grössten Durchmesser haben und diese Durchmesser in Richtung der Diagonalen der genannten Elementarzellen orientiert sind.

5. Packung nach einem der Ansprüche 1 bis 4, **dadurch gekennzeichnet, dass** das folienartige Material aus einer metallischen Legierung besteht und eine Dicke zwischen 0.1 und 0.4 mm, vorzugsweise eine Dicke zwischen 0.15 und 0.3 mm hat.

6. Packung nach Anspruch 5, **dadurch gekennzeichnet, dass** der mittlere Abstand b zwischen benachbarten Durchbrüchen 0.3 bis 2 mm beträgt.

7. Packung nach einem der Ansprüche 1 bis 6, **dadurch gekennzeichnet, dass** der relative, auf die gesamte Fläche des folienartigen Materials (1) bezogene Anteil der offenen Querschnittsflächen, die durch die Durchbrüche (5) gegeben sind, im Bereich zwischen 10 und 50% liegt.

8. Packung nach einem der Ansprüche 1 bis 7, **dadurch gekennzeichnet, dass** sie aus einer Mehrzahl von über einander angeordneten Packungselementen aufgebaut ist, dass jedes Packungselement aus einer Vielzahl von Packungslagen (1') zusammengesetzt ist und dass die Strömungskanäle (2) benachbarter Packungslagen sich offen kreuzen.

9. Packung nach einem der Ansprüche 1 bis 7, **dadurch gekennzeichnet, dass** sie heterogen aufgebaut ist aus Packungslagen (1'), die aus dem folienartigen Material (1) bestehen, und andersartigen Packungslagen, die insbesondere eine Struktur mit porösen Doppelwänden aufweisen, in denen katalytisch wirksame Stoffe eingebracht sind, wobei die aus dem folienartigen Material gebildeten Packungslagen auch als Träger von katalytisch wirksamen Stoffen ausgebildet sein können.

## Claims

1. Ordered column packing with a fine structuring (10), including foil-like material (1) in the form of packing layers containing flow channels (2), with the foil-like material being profiled with concave structure elements (3b; minus signs -) and convex structure elements (3a; plus signs +) in an alternating arrangement, with an average distance a existing between centers of adjacent concave and convex structure elements respectively and with this average distance a being substantially smaller than a distance between centerlines (20) of adjacent flow channels,
**characterized in that** the foil-like material has a second fine structuring which consists of regularly arranged apertures (5), with an average distance b between centers of adjacent apertures being smaller than the average distance a, preferably smaller by at least 50 %, and with edges (51, 52) of the apertures having in each case a shaping including convex and concave locations (6a, 6b).

2. Packing in accordance with claim 1, **characterized in that** the apertures (5) are formed by repetitively arranged slits (50), with a passage opening between the edges (51, 52) of the slits in each case being present as a result of a plastic shaping operation.

3. Packing in accordance with claim 1 or claim 2, **characterized in that** the convex and concave structure elements (3a, 3b) of the first fine structuring are arranged at the points of a first periodic point grid; and **in that** the apertures (5) of the second fine structuring are also advantageously arranged at the points of a second periodic point grid.

4. Packing in accordance with claim 3, **characterized in that** elementary cells of the first reference grid are square, the apertures (5) have in each case a greatest diameter and these diameters are oriented in the direction of the diagonals of the named elementary cells.

5. Packing in accordance with any one of the claims 1 to 4, **characterized in that** the foil-like material consists of a metallic alloy and has a thickness between 0.1 and 0.4 mm, preferably a thickness between 0.15 and 0.3 mm.

6. Packing in accordance with claim 5, **characterized in that** the average distance b between adjacent apertures amounts to from 0.3 to 2 mm.

7. Packing in accordance with any one of the claims 1 to 6, **characterized in that**, in relation to the total area of the foil-like material (1), the relative proportion of the open cross-sectional areas which are given through the apertures (5) lies in the range between 10 and 50 %.

8. Packing in accordance with any one of the claims 1 to 7, **characterized in that** it is built up of a plurality of packing elements which are arranged one above the other; **in that** each packing element is assembled from a large number of packing layers (1'); and **in that** the flow channels (2) of adjacent packing layers cross one another openly.

9. Packing in accordance with any one of the claims 1 to 7, **characterized in that** it is built up heterogeneously of packing layers (1') which consist of the foil-like material (1) and dissimilar packing layers which in particular have a structure with porous double walls in which catalytically active substances are introduced, with it being possible for the packing layers which are formed of the foil-like material also to be formed as carriers of catalytically active substances.

## Revendications

1. Garnissage de colonne ordonnée avec une structuration fine (10), comprenant un matériau en forme de feuille (1) sous la forme de couches de garnissage présentant des canaux d'écoulement (2), où le matériau en forme de feuille est profilé avec des éléments structurels concaves (3b; signes -) et des éléments structurels convexes (3a; signes +) selon un agencement alternant, où un écart moyen a existe entre des centres d'éléments structurels concaves, respectivement convexes avoisinants, et cet écart moyen a est nettement plus petit qu'un écart entre des lignes médianes (20) de canaux d'écoulement avoisinants, **caractérisé en ce que** le matériau en forme de feuille présente une seconde structuration fine qui est constituée de perçages (5) disposés régulièrement, où un écart moyen b entre des centres de perçages avoisinants est plus petit que l'écart moyen a, de préférence d'au moins 50 % plus petit, et les bords (51, 52) des perçages ont respectivement une configuration comprenant des emplacements convexes et concaves (6a, 6b).

2. Garnissage selon la revendication 1, **caractérisé en ce que** les perçages (5) sont formés par des fentes (50) disposées à répétition, où en raison d'une déformation plastique, respectivement une ouverture traversante est réalisée entre les bords (51, 52) des fentes.

3. Garnissage selon la revendication 1 ou 2, **caractérisé en ce que** les éléments structurels convexes et concaves (3a, 3b) de la première structuration fine sont disposés sur les points d'un premier réseau de points périodique, et **en ce qu'**avantageusement, également les perçages (5) de la seconde structuration fine sont disposés sur les points d'un second réseau de points périodique.

4. Garnissage selon la revendication 3, **caractérisé en ce que** les cellules élémentaires de la première grille de référence sont carrées, que les perçages (5) ont respectivement un plus grand diamètre, et que ces diamètres sont orientés dans la direction de la diagonale des cellules élémentaires indiquées.

5. Garnissage selon l'une des revendications 1 à 4, **caractérisé en ce que** le matériau en forme de feuille est constitué d'un alliage métallique et présente une épaisseur entre 0,1 et 0,4 mm, de préférence une épaisseur entre 0,15 et 0,3 mm.

6. Garnissage selon la revendication 5, **caractérisé en ce que** l'écart moyen b entre des perçages avoisinants est de 0,3 à 2 mm.

7. Garnissage selon l'une des revendications 1 à 6, **caractérisé en ce que** la part relative, par rapport à l'ensemble de la face du matériau en forme de feuille (1), des faces de section transversale ouvertes, qui sont réalisées par les perçages (5), est comprise entre 10 et 50 %.

8. Garnissage selon l'une des revendications 1 à 7, **caractérisé en ce qu'**il est constitué d'une multitude d'éléments de garnissage disposés les uns au-dessus des autres, **en ce que** chaque élément de garnissage est composé d'une pluralité de couches de garnissage (1'), et **en ce que** les canaux d'écoulement (2) de couches de garnissage avoisinantes se croisent ouvertement.

9. Garnissage selon l'une des revendications 1 à 7, **caractérisé en ce qu'**il est réalisé d'une manière hétérogène à partir de couches de garnissage (1') qui sont réalisées dans le matériau en forme de feuille (1), et de couches de garnissage d'un autre type, qui présentent notamment une structure avec des parois doubles poreuses dans lesquelles sont introduites des matières catalytiquement actives, où les couches de garnissage réalisées dans le matériau en forme de f euille peuvent également être réalisées comme supports de matières catalytiquement actives.
